# EUROPÄISCHE PATENTANMELDUNG

(11) **EP 2 511 625 A2**
(43) Veröffentlichungstag der Anmeldung: **17.10.2012**
(21) Anmeldenummer: 12002553.1
(22) Anmeldetag: 10.04.2012
(51) Int. Cl.: F24J 2/52, H01L 31/042, F16B 21/08

(54) **Klemmelement zur Befestigung von Solarmodulen und Befestigungseinrichtung**

(30) Priorität: 14.04.2011 DE 102011017053
(71) Anmelder: VM Edelstahltechnik GmbH, 58840 Plettenberg (DE)
(72) Erfinder: Mächtle, Daniel, 58840 Plettenberg (DE)
(74) Vertreter: Jakelski, Joachim

(57) **Zusammenfassung**

Ein Klemmelement zur Befestigung von Solarmodulen an Profilschienen ist gekennzeichnet durch einen Grundkörper, an dem zwei quer zur Längsrichtung des Grundkörpers federnd ausgebildete Klemmbacken angeordnet sind, die durch eine Betätigungseinrichtung in eine quer zur Längsrichtung des Grundkörpers wirkende Klemmposition verfahrbar sind.

## Beschreibung

Die Erfindung betrifft ein Klemmelement zur Befestigung von Solarmodulen an Profilschienen sowie eine Befestigungseinrichtung umfassend eine Profilschiene und ein solches Klemmelement.

### Stand der Technik

Solarmodule oder Solarzellen, insbesondere Fotovoltaikelemente zur Stromerzeugung, werden auf Dächern sehr oft an Trägergerüsten befestigt. Zur Befestigung von derartigen Solarzellen oder anderen Bauteilen an Trägergerüsten sind verschiedene Haltevorrichtungen bekannt. So werden beispielsweise Befestigungsmuttern für Profilschienen verwendet, wobei die Befestigungsmuttern auf ins Innere der Profilschiene U-förmig umgebogenen Enden der Schenkel der Profilschiene aufliegen. Zur Befestigung eines Gegenstands oder eines Bauteils wird in die Befestigungsmutter ein Gewindebolzen eingeschraubt. Um die Befestigungsmutter in der Profilschiene bequem vorpositionieren zu können, ist ein Halteelement für die Befestigungsmutter vorgesehen.

Eine solche Befestigungsmutter geht beispielsweise aus der DE 44 32 996 A1 hervor. Bei dieser Befestigungsmutter für Profilschienen sind parallel zu ihren Schmalseiten verlaufende verzahnte Bereiche bzw. zahnförmige Profilierungen vorgesehen, die einen verbesserten Halt an den nach innen umgebogenen Enden der Profilschiene bewirken sollen.

Die Gebrauchsmusterschrift DE 20 2005 010 186 U1 beschreibt eine Halteeinrichtung zur Anordnung in einer C-förmigen Profilschiene, die einen hohlzylinderförmigen Grundkörper mit Öffnungen zum Durchtritt einer Gewindeplatte und auf der gegenüberliegenden Seite des Grundkörpers einen Auflageflansch zur Auflage auf Abschnitten der C-förmigen Profilschiene aufweist. Zwischen der Durchtrittsöffnung für die Gewindeplatte und dem Auflageflansch ist ein Distanzbund zur Beabstandung der Befestigungsmutter zum Auflageflansch vorgesehen. Die Befestigungsmutter ist als quaderförmige Gewindeplatte ausgestaltet, wobei vergleichbar mit der DE 44 32 996 A1 parallel zu den Schmalseiten Riffelungen vorgesehen sind, um den Halt und die Positionierung in der C-förmigen Profilschiene zu verbessern.

Aus der DE 20 2009 012 871 U1 ist eine Kombination einer Halteeinrichtung mit einer Gewindeplatte bekannt geworden, wobei die Halteeinrichtung zum Einführen und Fixieren der Gewindeplatte in eine C-förmige Profilschiene vorgesehen ist und einen hohlzylinderförmigen Grundkörper mit Öffnungen in einem unteren Bereich zur Aufnahme der Gewindeplatte aufweist, und wobei die Halteeinrichtung in einem oberen Bereich einen Auflageflansch als Auflagefläche der Halteeinrichtung auf Abschnitten der C-förmigen Profilschiene aufweist. An der Oberseite der Gewindeplatte sind Nuten zum Eingriff von Vorsprüngen der C-förmigen Profilschiene vorgesehen.

Die DE 20 2008 002 264 U1 offenbart eine Haltevorrichtung für plattenförmige Elemente, insbesondere Solarmodule, mit wenigstens einem oberen und wenigstens einem insbesondere im Wesentlichen komplementären unteren Grundkörper, wobei die Grundkörper jeweils einen Quersteg, Stützelemente und Klemmelemente aufweisen, und wobei bei zusammengefügten Grundkörpern die Klemmelemente des oberen und des unteren Grundkörpers zur Aufnahme von plattenförmigen Elementen vorgesehen sind. Zwischen den Stützelementen ist wenigstens ein komprimierbarer Block angeordnet, dessen Höhe im nicht komprimierten Zustand größer als der Abstand zwischen den Querstegen der zusammengefügten Grundkörper ist. Auf dieser Haltevorrichtung ist eine Schraube und eine entsprechende Gewindeplatte bzw. eine entsprechend fixierbare Mutter vorgesehen.

All diese vorgenannten Befestigungs- und Haltevorrichtungen sind jeweils senkrecht zu der auf dem Dach angeordneten Profilschiene befestigt, also durch im Wesentlichen senkrecht zur Dachoberfläche angeordnete Schrauben, die in entsprechende Gewinde von Gewindeplatten und dergleichen eingreifen. Insbesondere bei Solarmodulen, die mit Profilschienen verklebt sind und als solche zusammen mit den Profilschienen als ein Teil gehandhabt werden müssen, ist jedoch eine solche Befestigung in vielen Fällen nicht möglich.

Ein solches, mit einem Profilelement verklebtes Solarzellenmodul geht beispielsweise aus der nicht vorveröffentlichten Anmeldung DE 10 2010 005 570.0 der Anmelderin hervor.

Der Erfindung liegt die Aufgabe zugrunde, eine Halteeinrichtung und eine Befestigungseinrichtung für ein Solarzellenmodul, welches durch eine Klebeverbindung auf einem Profilelement befestigt ist und mit diesem als Ganzes zu handhaben ist, zu vermitteln. Das Befestigungselement oder die Befestigungseinrichtung soll dabei auf einfache Weise handhabbar sein. Insbesondere soll auch eine Befestigung möglich sein ohne das Erfordernis von Schraubverbindungen, die im Wesentlichen senkrecht zur Dachoberfläche angeordnet sind.

### Offenbarung der Erfindung

### Vorteile der Erfindung

Die Aufgabe wird gelöst durch ein Klemmelement zur Befestigung von Solarmodulen an Profilschienen, das gekennzeichnet ist durch einen Grundkörper, an dem zwei quer zur Längsrichtung des Grundkörpers federnd ausgebildete Klemmbacken angeordnet sind, die durch eine Betätigungseinrichtung in eine quer zur Längsrichtung des Grundkörpers wirkende Klemmposition verfahrbar sind.

Dieses Klemmelement weist den entscheidenden Vorteil auf, dass es aufgrund der federnd ausgebildeten Klemmbacken, die durch die Betätigungseinrichtung in Klemmposition verfahrbar sind, eine Befestigung ohne das Erfordernis von Gewindeplatten und entsprechenden Schraubverbindungen ermöglicht. Die Befestigung erfolgt vielmehr auf sehr vorteilhafte Weise durch eine Klemmwirkung.

Ein besonderer Vorteil, auf den nachfolgend noch eingegangen wird, liegt darin, dass ein solches Klemmelement auch an einer Profilschiene von der Seite her (im Wesentlichen parallel zur Dachoberfläche) befestigt werden kann, d.h. eine Befestigung senkrecht zu den Solarmodulen nicht erforderlich ist. Damit eignet sich das Klemmelement in besonderer Weise zur Befestigung von Solarmodulen, die mit Profilschienen verklebt sind und die in vielen Fällen eine Befestigung senkrecht zur Solarmoduloberfläche und damit auch senkrecht zur Dachoberfläche nicht gestatten.

Durch die in den Ansprüchen 2 bis 8 aufgeführten Maßnahmen sind vorteilhafte Weiterbildungen und Verbesserungen der im unabhängigen Anspruch angegebenen Vorrichtung möglich. So sieht eine besonders vorteilhafte Ausführungsform vor, dass die Befestigungseinrichtung einen von einer Stirnseite des Grundkörpers her drehbaren Gewindebolzen und einen mit dem Gewindebolzen zusammenwirkenden Läufer umfasst, wobei der Läufer in schräg verlaufenden, an den Klemmbacken angeordneten Führungselementen drehfest geführt ist. Diese Mimik: Gewindebolzen und mit dem Gewindebolzen zusammenwirkender Läufer, der in schräg verlaufenden, mit den Klemmbacken verbundenen Führungselementen drehfest geführt ist, ermöglicht durch eine Drehung des Gewindebolzens eine Bewegung des Läufers in Längsrichtung des Grundkörpers und aufgrund der schräg verlaufenden, mit den Klemmbacken verbundenen Führungselemente gleichzeitig die Ausübung einer Kraft senkrecht zu dem Gewindebolzen in Klemmrichtung. Diese Kraft senkrecht zum Gewindebolzen wird durch die schräg verlaufenden Führungselemente hervorgerufen. Es entsteht insoweit eine Keilwirkung auf die Klemmbacken durch die Bewegung des Läufers, der im Grunde eine Mutter darstellt, die in den Führungselementen drehfest angeordnet ist. Bevorzugt sind hierzu die schräg verlaufenden Führungselemente auf den dem Läufer zugewandten Innenseiten der Klemmbacken angeordnet. Hierdurch ist eine besonders optimale Kraftübertragung senkrecht zur Laufrichtung des Läufers und damit zur Axialrichtung des Gewindebolzens erzielbar.

Der Läufer weist bevorzugt neben den vorerwähnten Führungselementen ein weiteres Führungselement auf. Dieses Führungselement dient der Zusammenwirkung mit einer Profilschiene im montierten Zustand des Klemmelements auf die nachfolgend noch näher beschriebene Weise.

Gemäß einer vorteilhaften Ausgestaltung weist der Grundkörper ebenfalls im Wesentlichen parallel zu dem Gewindebolzen verlaufende Führungsschienen auf. Auch diese Führungsschienen dienen der Zusammenwirkung mit einer Profilschiene auf die nachfolgend noch näher beschriebene Weise. Um eine seitliche Befestigung und damit eine Befestigung im Wesentlichen parallel zur Oberfläche der Solarelemente und damit im Wesentlichen parallel zur Dachoberfläche zu ermöglichen, ist an der Stirnseite des Klemmelements ein Befestigungselement für eine Profilschiene oder dergleichen vorgesehen. Diese Profilschiene kann beispielsweise mit einem Solarmodul verklebt sein und so mit diesem eine als Ganze zu handhabende Einheit bilden.

Eine sehr vorteilhafte Ausgestaltung sieht vor, dass das Befestigungselement einen U-förmigen Rahmen aufweist, dessen einer U-Schenkel einen Klemmbacken bildet und in deren anderem U-förmigen Schenkel eine im Wesentlichen parallel zum Gewindebolzen verlaufende Klemmschraube angeordnet ist. Eine solche Anordnung ermöglicht eine klemmende Befestigung einer Profilschiene. Besonders vorteilhaft ist, dass ein solcher U-förmiger Rahmen sehr kompakt aufgebaut sein kann und insbesondere so ausgebildet sein kann, dass er über die zu befestigende Profilschiene nicht übersteht.

Gemäß einer anderen Ausgestaltung kann aber auch vorgesehen sein, dass das Befestigungselement ein Hakenelement umfasst, das durch eine im Wesentlichen senkrecht zum Gewindebolzen verlaufende Schraube fixierbar ist. Dabei ist zu bemerken, dass dieses Hakenelement außerhalb der Solarmodule angeordnet ist und insoweit die Schraube die Befestigung der Solarmodule in keiner Weise stört.

Die Aufgabe wird darüber hinaus durch eine Befestigungseinrichtung umfassend eine Profilschiene und ein derartiges Klemmelement dadurch gelöst, dass in der Profilschiene Nuten und/oder Abschnitte zur Aufnahme der Klemmbacken, zur Aufnahme der an dem Grundkörper des Klemmelements angeordneten Führungsschienen und zur Aufnahme des an dem Läufer ausgebildeten Führungselements vorgesehen sind. Bevorzugt greifen dabei die Klemmbacken in an sie angepasste Nuten ein. Darüber hinaus greifen die an dem Grundkörper des Klemmelements angeordneten Führungsschienen in an sie angepasste Nuten ein. Schließlich ist das an dem Läufer ausgebildete wenigstens eine Führungselement eine an dem Läufer stirnseitig angeordnete im Wesentlichen rechteckige Platte, die auf stirnseitig an der Profilschiene angeordneten Abschnitten gleitet.

### Kurze Beschreibung der Zeichnungen

Ausführungsbeispiele der Erfindung sind in den Zeichnungen dargestellt und in der nachfolgenden Beschreibung näher erläutert. Hierbei können die einzelnen Merkmale jeweils für sich oder in Kombination miteinander verwirklicht sein.

Es zeigen:
- Fig. 1: eine isometrische Darstellung zweier Ausführungsformen einer Befestigungseinrichtung mit der erfindungsgemäßen Klemmeinrichtung;

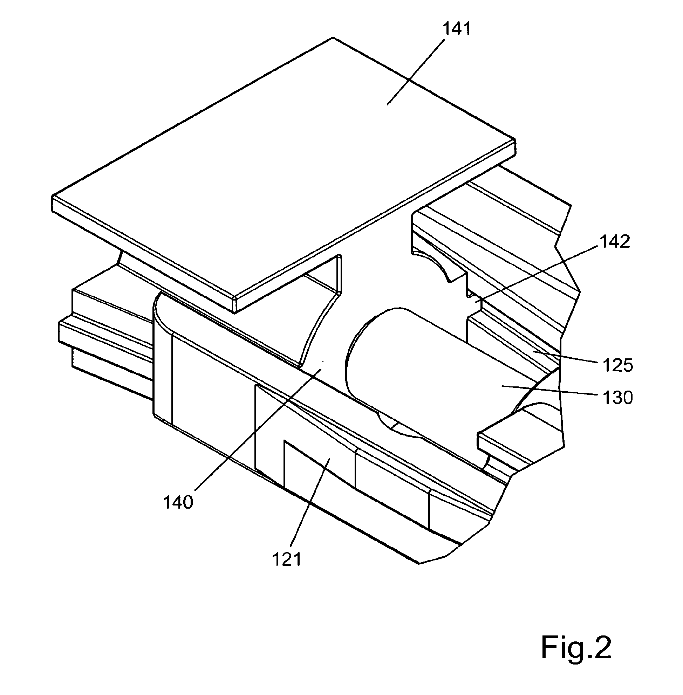

- Fig. 2: eine in Fig. 1 mit II bezeichnete Ausschnittvergrößerung;
- Fig. 3: eine Stirnansicht der in Fig. 1 dargestellten Befestigungseinrichtung;
- Fig. 4: eine Seitenansicht der in Fig. 1 dargestellten Befestigungseinrichtung und
- Fig. 5: eine Draufsicht der in Fig. 1 dargestellten Befestigungseinrichtung.

### Beschreibung der Ausführungsbeispiele

Eine in den Figuren dargestellte Befestigungseinrichtung wird gebildet durch eine Profilschiene 50 und ein mit dieser zusammenwirkendes Klemmelement 100. Das Klemmelement 100 weist einen Grundkörper 110 auf, an dessen einem Ende zwei Klemmbacken 121, 122 vorgesehen sind. Die beiden Klemmbacken 121, 122 dienen der Befestigung des Klemmelements 100 in dem Profilelement 50 durch Klemmung auf die nachfolgend beschriebene Weise.

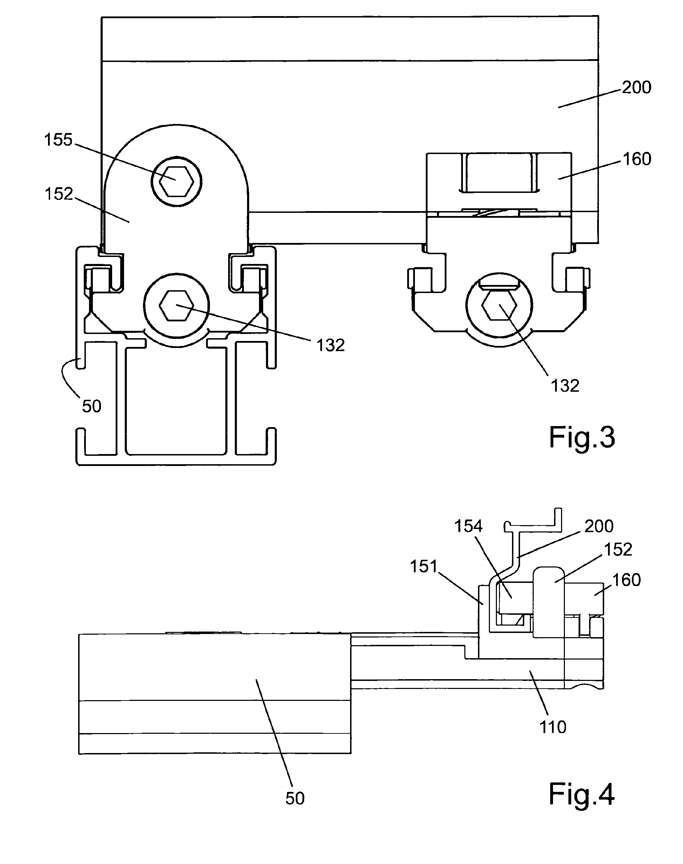

In Längsrichtung des Klemmelements 100 ist ein Gewindebolzen 130 vorgesehen. Der Gewindebolzen 130 ist in den Figuren schematisch dargestellt, er weist an der Stirnseite des Klemmelements einen beispielsweise Innensechskant 132 auf (siehe Fig. 3), sodass er von der Stirnseite des Klemmelements her betätigbar, d.h. drehbar ist. Der Gewindebolzen 130 wirkt mit einem Läufer 140 zusammen, der ein an den Gewindebolzen 130 angepasstes Innengewinde aufweist. Durch eine Drehbewegung des Gewindebolzens 130 in Uhrzeigerrichtung bewegt sich bei einem Rechtsgewinde der Läufer 140 hin zur Stirnseite des Klemmelements 100.

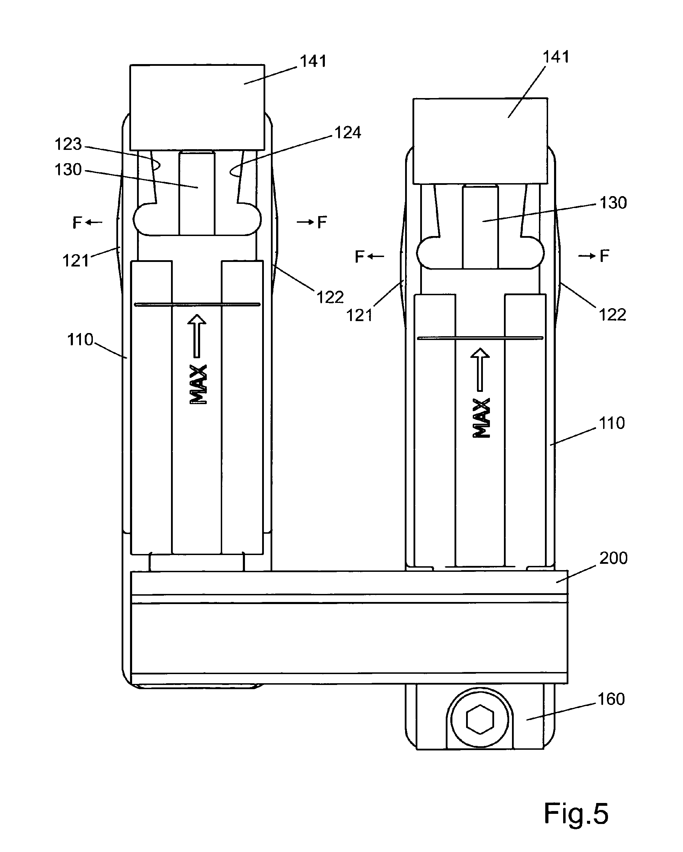

An den Innenseiten 123, 124 der Klemmbacken 121, 122 sind Führungselemente 125, beispielsweise in Form von Nuten vorgesehen, in die entsprechende, an dem Läufer 140 angeordnete Vorsprünge 142 eingreifen und darin längsverschieblich geführt sind. Zu bemerken ist hierbei, dass diese Führungselemente 125 schräg zur Längsrichtung des Klemmelements verlaufen, d.h. die Innenseiten 123, 124 der Klemmbacken 121, 122 verjüngen sich zur Stirnseite des Klemmelements hin. Beim Rechtsdrehen des Gewindebolzens 130 beginnt der Läufer 140 in Richtung der Stirnseite des Klemmelements 100 zu laufen. Dabei werden die Vorsprünge 142 in den schräg verlaufenden Nuten 125 in Längsrichtung verschoben. Durch die Anordnung der Nuten 125 wird auf diese Weise eine Kraft senkrecht zu dem Gewindebolzen 130, d.h. jeweils nach außen wirkende Kräfte F der Klemmbacken 121, 122 bewirkt (siehe Fig. 5). Hierdurch entsteht eine Klemmwirkung in der Profilschiene 50. Die Profilschiene 50 weist hierzu zwei sich gegenüberliegende Nuten 52 auf, die an die Klemmbacken 121, 122 angepasst sind und in denen die Klemmbacken 121, 122 angeordnet sind.

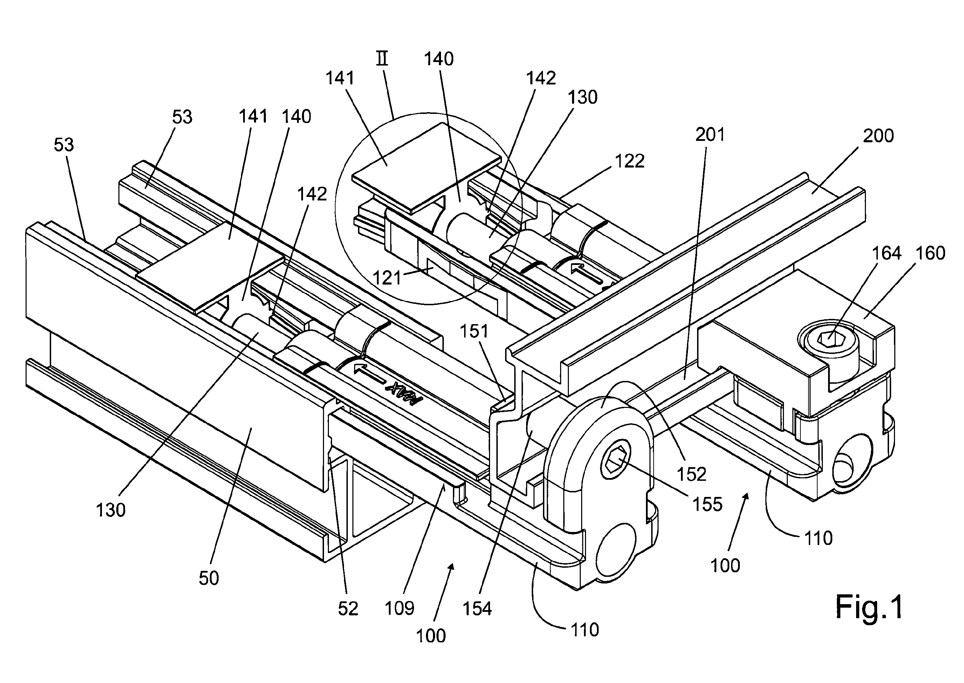

Wie insbesondere der Fig. 1 zu entnehmen ist, kann das Klemmelement 100 weitere Führungselemente, beispielsweise Führungsschienen 109 aufweisen, die in entsprechender Weise in diesen Nuten 52 oder in anderen Nuten angeordnet sind und eine Führung in Längsrichtung des Klemmelements bewerkstelligen.

Auch der Läufer 140 kann ein weiteres Führungselement aufweisen, beispielsweise in Form einer rechteckigen Platte 141, die auf entsprechenden Abschnitten 53 der Profilschiene 50 aufliegt und dabei eine Längsführung realisiert. Dabei sind die Abschnitte 53 so tief ausgebildet, dass die rechteckige Platte 141, die den Läufer 140 stirnseitig abschließt, nicht über die Profilschiene 50 übersteht und so kompakt baut und insbesondere auf der Profilschiene 50 zu befestigende Solarelemente in keiner Weise beeinträchtigt.

An der Stirnseite des Klemmelements sind Befestigungselemente für eine weitere Profilschiene 200 vorgesehen. Eine erste Ausgestaltung, die sich durch eine besonders kompakte Bauweise auszeichnet, sieht als Befestigungselement einen U-förmigen Rahmen vor mit einem ersten U-Schenkel 151 und einem zweiten U-Schenkel 152 (vergl. Fig. 4). In dem zweiten Profilschenkel 152 ist eine Schraube 154, die ebenfalls stirnseitig mittels beispielsweise eines Innensechskants 155 betätigbar ist, einschraubbar. Die Schraube 154 wird dabei in Richtung des ersten Schenkels 151 bewegt und klemmt auf diese Weise die Profilschiene 200, die insbesondere am unteren Ende einen C-förmigen Knick aufweist, der an dem Schraubengewinde anliegt und insoweit eine verkippsichere Befestigung der Profilschiene 200 ermöglicht. Die in der Zeichnung dargestellte weitere Profilschiene 200 dient der Befestigung von (der besseren Übersichtlichkeit halber nicht gezeigten) Solarmodulen mittels einer Klebeverbindung, wie es aus der DE 20 2010 000 940 U1, auf die insoweit vollinhaltlich Bezug genommen wird, hervorgeht. Die Solarmodule sind in diesem Falle über den Profilschienen 50 und im Wesentlichen parallel zu diesen verlaufend angeordnet und erstrecken sich in Fig. 1 von der Profilschiene 200 weg nach links.

Eine andere Ausgestaltung sieht ein Hakenelement 160 vor, welches mittels einer Schraube 164, die in diesem Falle senkrecht zu dem Klemmelement 100 angeordnet ist, fixierbar ist und in eine entsprechende Nut 201 der Profilschiene 200 eingreift.

Das vorstehend beschriebene Klemmelement 100 und die an dieses angepasste Profilschiene 50, welche mit dem Klemmelement 100 zusammen eine Befestigungseinrichtung bildet, weisen den Vorteil auf, dass eine klemmende Befestigung in Parallelrichtung zur Dach- und damit zur Solarmoduloberfläche möglich ist. Auf diese Weise sind großflächige und unterbrechungsfreie Anordnungen von Solarmodulen auf Dächern möglich.

## Patentansprüche

1. Klemmelement (100) zur Befestigung von Solarmodulen an Profilschienen (50), **gekennzeichnet durch** einen Grundkörper, an dem zwei quer zur Längsrichtung des Grundkörpers federnd ausgebildete Klemmbacken (121, 122) angeordnet sind, die **durch** eine Betätigungseinrichtung (130, 140) in eine quer zur Längsrichtung des Grundkörpers wirkende Klemmposition verfahrbar sind.

2. Klemmelement (100) nach Anspruch 1, **dadurch gekennzeichnet, dass** die Betätigungseinrichtung (130, 140) einen von einer Stirnseite des Grundkörpers her drehbaren Gewindebolzen (130) und einen mit dem Gewindebolzen (130) zusammenwirkenden Läufer (140) umfasst, wobei der Läufer (140) in schräg verlaufenden, mit den Klemmbacken verbundenen Führungselementen (125) drehfest geführt ist.

3. Klemmelement (100) nach Anspruch 2, **dadurch gekennzeichnet, dass** die schräg verlaufenden Führungselemente (125) auf den dem Läufer zugewandten Innenseiten (123, 124) der Klemmbacken (121, 122) angeordnet sind.

4. Klemmelement (100) nach Anspruch 2 oder 3, **dadurch gekennzeichnet, dass** der Läufer (140) wenigstens ein weiteres Führungselement (141) aufweist.

5. Klemmelement (100) nach einem der vorstehenden Ansprüche, **dadurch gekennzeichnet, dass** der Grundkörper im Wesentlichen parallel zu dem Gewindebolzen (130) verlaufende Führungsschienen (109) aufweist.

6. Klemmelement (100) nach einem der vorstehenden Ansprüche, **dadurch gekennzeichnet, dass** es an seiner Stirnseite ein Befestigungselement für eine weitere Profilschiene (200) aufweist.

7. Klemmelement (100) nach Anspruch 6, **dadurch gekennzeichnet, dass** das Befestigungselement einen U-förmigen Rahmen aufweist, dessen einer U-Schenkel (151) einen Klemmbacken bildet und in dessen anderem U-Schenkel (152) eine im Wesentlichen parallel zum Gewindebolzen (130) verlaufende Klemmschraube (154) angeordnet ist.

8. Klemmelement (100) nach Anspruch 6, **dadurch gekennzeichnet, dass** das Befestigungselement ein Hakenelement (160) umfasst, das durch eine im Wesentlichen senkrecht zum Gewindebolzen (130) verlaufende Schraube (164) fixierbar ist.

9. Befestigungseinrichtung umfassend eine Profilschiene (50) und ein Klemmelement (100) nach einem der Ansprüche 1 bis 8, **dadurch gekennzeichnet, dass** in der Profilschiene (50) Nuten (52) und/oder Abschnitte (53) zur Aufnahme der Klemmbacken (121, 122), zur Aufnahme der an dem Grundkörper des Klemmelements (100) angeordneten Führungsschienen (109) und zur Aufnahme des an dem Läufer (140) ausgebildeten Führungselements (141) vorgesehen sind.

10. Befestigungseinrichtung nach Anspruch 9, **dadurch gekennzeichnet, dass** die in der Profilschiene (50) angeordneten Nuten (52) an die Klemmbacken (121, 122) angepasst sind.

11. Befestigungseinrichtung nach Anspruch 9, **dadurch gekennzeichnet, dass** in die der Profilschiene (50) angeordneten Nuten (52) an die Führungsschienen (109) angepasst sind.

12. Befestigungseinrichtung nach Anspruch 9, **dadurch gekennzeichnet, dass** das an dem Läufer (140) ausgebildete wenigstens eine Führungselement (141) eine an dem Läufer (140) angeordnete im Wesentlichen rechteckige Platte ist, die in an der Profilschiene (50) ausgebildeten Abschnitte (53) gleitet.
